# EUROPÄISCHE PATENTSCHRIFT

(11) **EP 1 350 425 B1**
(45) Veröffentlichungstag und Bekanntmachung des Hinweises auf die Patenterteilung: **10.05.2017**
(21) Anmeldenummer: 03006330.9
(22) Anmeldetag: 20.03.2003
(51) Int. Cl.: A01F 15/08, F16H 55/17

(54) **Zahnrad zum Antrieb einer Kurbel**
Gear for driving a cranckshaft
Roue dentée pour l'entraînement d'un vilebrequin

(30) Priorität: 05.04.2002 DE 10215138
(43) Veröffentlichungstag der Anmeldung: 08.10.2003
(73) Patentinhaber: CLAAS Selbstfahrende Erntemaschinen GmbH, 33428 Harsewinkel (DE)
(72) Erfinder: Clostermeyer, Gerhard, 33334 Gütersloh (DE)

(56) Entgegenhaltungen:
- EP-A- 1 172 584
- DE-A- 19 721 568
- FR-A- 2 488 997
- US-A- 1 648 550
- US-A- 2 665 631

## Beschreibung

Die Erfindung bezieht sich auf eine landwirtschaftliche Ballenpresse, die ein Zahnrad zum Antrieb mindestens einer mit der Drehwelle des Zahnrades verbundenen Kurbel aufweist, wobei das Zahnrad von einem Zahnelement für den Betrieb eines Presskolbens in einer landwirtschaftlichen Ballenpresse, angetrieben wird.

Aus der FR 2 488 997 A3 ist eine kombinierte Inkrement- und Bezugsmarkenerkennung für eine rotierende Welle, insbesondere die Kurbelwelle einer Brennkraftmaschine bekannt, bei der mit Hilfe einer mit der Welle umlaufenden Verzahnung Winkelimpulse generierbar sind, wobei die Zahnbreiten der Verzahnung unterschiedlich ausgebildet sein können.

Die US 2 665 631 (A) betrifft einen Antriebsmechanismus für eine landwirtschaftliche Ballenpresse mit einer länglichen Presskammer, in der ein Kolben über eine Kurbelwelle mittels einer Schwungradeinrichtung zum Verdichten des Erntegutes hin- und her-bewegbar ist. Zur Absicherung gegen eine Überlastung ist zwischen der Schwungradvorrichtung und der Kurbelwelle ein Scherbolzen vorgesehen, der bei einer Überlast bricht, wobei der Kolben stillstehen und die Schwungradeinrichtung weiterlaufen kann.

Bei den bekannten Antriebssystemen mit Zahnradgetrieben (DD 299 455 A7) tritt aufgrund des durch den Kurbeltrieb bedingten periodischen Verlaufs des Antriebsdrehmomentes mit hohen Spitzenwerten auch am Getriebe eine ungleichförmige Belastung auf. Dementsprechend sind auch die Getriebebauteile dimensioniert und auf die größte Belastung ausgelegt, sodass alle auftretenden Belastungen störungsfrei übertragen werden können. Obwohl die Belastungsspitzen im Verlauf eines Bewegungsintervalls nur in einem geringen Drehwinkelbereich auf das Zahnrad einwirken und im übrigen Bereich wesentlich niedrigere Beanspruchungen vorhanden sind, sind die Bauteile nicht an diese unterschiedlichen Bedingungen angepasst und über den gesamten Umfang völlig gleichförmig ausgebildet. Dies hat den Nachteil, dass insbesondere das auf der Getriebeausgangswelle angeordnete große Zahnrad eine verhältnismäßig große Masse aufweist und einen hohen Zeitaufwand für die Herstellung der Verzahnung erfordert.

Der Erfindung liegt die Aufgabe zugrunde, den Kurbelantrieb so auszuführen, dass das auf der Ausgangswelle angeordnete Zahnrad den ungleichförmigen Belastungsverhältnissen angepasst und dadurch dessen Herstellungsaufwand verringert wird. Erfindungsgemäß wird diese Aufgabe durch die im Patentanspruch 1 genannten Merkmale gelöst. Weitere vorteilhafte Ausführungen des Erfindungsgegenstandes ergeben sich aus den nachgeordneten Ansprüchen.

Die erfindungsgemäße Ausführung des Antriebszahnrades ermöglicht bei Beibehaltung der erforderlichen Festigkeitswerte eine Masseverringerung und eine Senkung der Herstellungskosten.

Indem ein nur über einen bestimmten Drehwinkel stark belastetes Zahnrad nur in diesem Bereich verstärkt ausgeführt wird, gelangt man zu einer kostengünstigen, eine geringe Masse aufweisenden und dennoch hohe Lasten übertragenden Zahnradausführung. Ein bevorzugtes Einsatzgebiet solcher Zahnräder wird überall dort sein, wo Zahnräder während ihres Umlaufs nur innerhalb eines oder mehrere bestimmter Drehwinkelbereiche hohen Lasten ausgesetzt sind, wie das insbesondere bei Presskolbenantrieben für landwirtschaftliche Ballenpressen der Fall ist.
Eine besonders bauraum- und masseeinsparende Ausführung wird dann erreicht, wenn die Breite des verstärkten Bereichs des Zahnrades der Breite des antreibenden Zahnsegmentes entspricht und der übrige Bereich des Zahnrades eine geringere Breite aufweist.
Auf konstruktive einfache Weise wird diese Verbreiterung durch fest oder lösbar mit dem Grundkörper des Zahnrades verbundene Verbreiterungselemente erreicht.
In Abhängigkeit von den auftretenden Belastungen kann sich die Verbreiterung des jeweiligen Zahnrades bis zu dessen Nabe oder nur über dessen Verzahnungsbereich erstrecken.

Die Erfindung wird nachstehend an einem Ausführungsbeispiel näher erläutert. In der zugehörigen Zeichnung zeigen
Fig.1: eine schematische Seitenansicht des vorderen Bereiches einer Großballen presse,

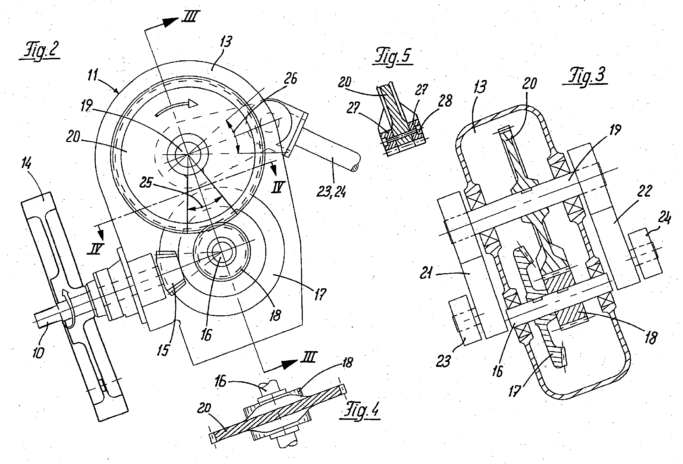

Fig.2: einen teilweisen Längsschnitt durch das Hauptgetriebe,
Fig.3: den Schnitt III-III nach Fig. 2,
Fig. 4: den Schnitt IV-IV nach Fig.2.
Fig. 5: einen Schnitt nach Verlauf der Linie III-III im Zahnbereich der Scheibe

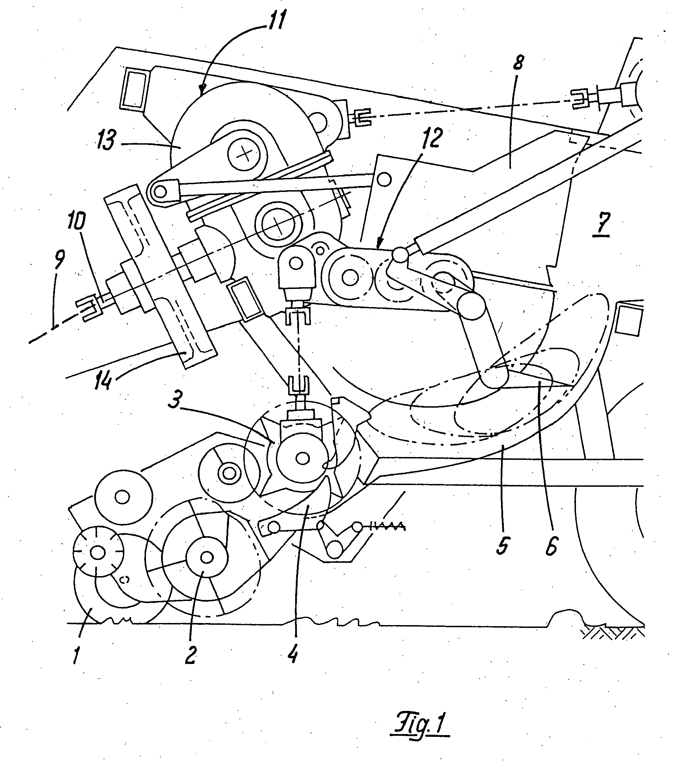

Der Erfindungsgegenstand wird nachstehend beispielhaft an einer landwirtschaftlichen Schubkolbenpresse näher erläutert, wobei das Zahnelement 18 als ein kleines Stirnrad 18 und das Zahnrad 20 als ein großes Stirnrad 20 bezeichnet werden.
Bei der in der Fig. 1 dargestellten Schubkolben-Ballenpresse für landwirtschaftliche Erntegüter wird das auf dem Boden abgelegte Erntegut über eine auf den Stützrädern 1 geführte Aufnehmertrommel 2, einen Schneidrotor 3 und diesem zugeordneten Gegenmessern 4 und einen Zuführkanal 5 mit einem gesteuerten Zubringer 6 in den Presskanal 7 gefördert. In diesem wird das Erntegut durch einen periodisch, geradlinig hin- und herbewegten Presskolben 8 zu Großballen gepresst. Die Schubkolben-Ballenpresse wird von einem nicht dargestellten Traktor gezogen und angetrieben. Die Antriebsübertragung erfolgt von der Zapfwelle des Traktors aus über eine Gelenkwelle 9 auf die Eingangswelle 10 eines Hauptgetriebes 11. vom Hauptgetriebe 11 werden der Presskolben 8 und die an sich bekannte und deshalb nicht näher dargestellte Bindeeinrichtung für die gepressten Ballen sowie von einem Nebengetriebe 12 mehrere Funktionsorgane für die Erntegutförderung angetrieben, wobei die einzelnen Bewegungsabläufe eine genaue Zuordnung zueinander aufweisen. Auf der Eingangswelle 10 ist außerhalb des Getriebegehäuses 13 eine Schwungscheibe 14 mit zugehörigen Überlastsicherungen angeordnet. Das Hauptgetriebe 11 weist eingangsseitig eine Kegelradstufe 15,17 auf, der eine Stirnradstufe 18,20 nachgeordnet ist. Auf der Eingangswelle 10 ist ein Kegelrad 15 befestigt, das mit einem auf einer Zwischenwelle 16 angeordneten tellerförmigen Kegelrad 17 in Verbindung steht. Neben dem Kegelrad 17 ist auf der Zwischenwelle 16 ein kleines als Stirnrad ausgeführtes Zahnelement 18 angeordnet, das mit einem auf einer Ausgangswelle 19 gelagerten großen Stirnrad (Zahnrad) 20 kämmend in Verbindung steht. Auf der Ausgangswelle 19 sind außerhalb des Getriebegehäuses 13 beidseitig Kurbelarme 21,22 angeordnet, an deren freien Enden Kurbelstangen 23,24 gelagert sind, die mit dem Presskolben 8 in Wirkverbindung stehen und dessen Antrieb bewirken. In der vorderen Totpunktlage des Presskolbens 8 wird das Erntegut durch den gesteuerten Zubringer 6 in den Presskanal 7 gefördert. Der danach folgende Pressvorgang erfordert ein hohes Drehmoment, das jedoch am großen Stirnrad (Zahnrad) 20 nur in einem relativ kleinen Bereich des Drehwinkels 25 im Kontakt mit dem kleinen Stirnrad (Zahnelement) 18 wirkt. Der Drehwinkel 25 mit hoher Belastung entspricht in seiner Größe dem Drehwinkel 26, der den Bereich der Kurbelbewegung mit der größten Belastung beim Pressvorgang begrenzt. Entsprechend dieser ungleichförmigen Belastungsverteilung weist das angetriebene Zahnrad 20 über den Umfangsbereich eine ungleichmäßige Zahnbreite auf, wobei nur in dem hochbelasteten Bereich des Drehwinkels 25 die Zahnbreite des Zahnrades 20 größer als in seinem übrigen Bereich ist. In dem dargestellten Ausführungsbeispiel sind die verschiedenen Zahnbreiten des Zahnrades 20 und des mit ihm kämmenden Zahnelementes 18 so aufeinander abgestimmt, dass die Zahnbreite des kleinen Stirnrades (Zahnelement)18 mit der Zahnbreite des Zahnrades 20 im Bereich des Drehwinkels 25 übereinstimmt und im übrigen Umfangsbereich das große Stirnrad (Zahnrad) 20 eine geringere Zahnbreite als das kleine Stirnrad (Zahnelement) 18 aufweist. Dies wird durch eine entsprechende ungleichförmige Ausbildung des Schmiede- bzw. Gussrohlings oder durch das Anbringen von Verbreiterungselementen 27 an den Grundkörper des Stirnrades (Zahnrad) 20 mit lösbaren oder unlösbaren Befestigungsmitteln 28 erreicht. Die Verbreiterung der Zahnbreite kann sich sowohl bis zur Nabe des Sternrades (Zahnrad) 20 erstrecken als auch ausschließlich im Verzahnungsbereich angeordnet sein.
Es liegt im Rahmen der Erfindung, dass ein oder mehrere Zahnräder 20 eines Getriebes 11 mit erfindungsgemäßen Verbreiterungselementen 27 in einem oder mehreren abgegrenzten Drehwinkelbereichen 25 versehen sein können.

### Bezugszeichenliste

- 1: Stützräder
- 2: Aufnehmertrommel
- 3: Schneidrotor
- 4: Gegenmesser
- 5: Zuführkanal
- 6: Zubringer
- 7: Presskanal
- 8: Presskolben
- 9: Gelenkwelle
- 10: Eingangswelle
- 11: Hauptgetriebe
- 12: Nebengetriebe
- 13: Getriebegehäuse
- 14: Schwungscheibe
- 15: Kegelrad
- 16: Zwischenwelle
- 17: Tellerrad
- 18: Zahnelement (kleines Stirnrad)
- 19: Ausgangswelle
- 20: Zahnrad (großes Stirnrad)
- 21: Kurbelarm
- 22: Kurbelarm
- 23: Kurbelstange
- 24: Kurbelstange
- 25: Drehwinkel
- 26: Drehwinkel
- 27: Verbreiterungselemente
- 28: Befestigungsmittel

## Patentansprüche

1. Eine landwirtschaftliche Ballenpresse, die ein Zahnradgetriebe mit wenigstens einem Zahnrad zum Antrieb mindestens einer mit einer Drehwelle verbundenen Kurbel aufweist, wobei das Zahnrad von einem Zahnelement für den Antrieb eines Presskolbens in einer landwirtschaftlichen Ballenpresse angetrieben wird, **dadurch gekennzeichnet, dass** das Zahnrad (20) in seiner Umfangsrichtung eine ungleichmäßige Zahnbreite aufweist und wobei die größere Zahnbreite im Bereich hoher Belastungen ausgebildet ist.

2. Ballenpresse nach Anspruch 1, **dadurch gekennzeichnet, dass** die Zahnbreite des Zahnrades (20) in zumindest einem begrenzten Bereich des Drehwinkels (25) größer als die Zahnbreite des übrigen Bereichs des Zahnrades (20) ist.

3. Ballenpresse nach Anspruch 2, **dadurch gekennzeichnet, dass** die Zahnbreite des übrigen Bereichs des Zahnrades (20) geringer als die Zahnbreite des kämmenden Zahnelementes (18) ist.

4. Ballenpresse nach Anspruch 2 oder 3, **dadurch gekennzeichnet, dass** die Zahnbreite des Zahnrades (20) in dem Bereich des Drehwinkels (25) etwa der Zahnbreite des kämmenden Zahnelementes (18) entspricht.

5. Ballenpresse nach einem oder mehreren der Ansprüche 2 bis 4, **dadurch gekennzeichnet, dass** der Rohling des Zahnrades (20) im Bereich des Drehwinkels (25) eine größere Breite als im übrigen Umfangsbereich aufweist.

6. Ballenpresse nach einem oder mehreren der Ansprüche 2 bis 5, **dadurch gekennzeichnet, dass** im Bereich des Drehwinkels (25) des Zahnrades (20) Verbreiterungselemente (27) angeordnet sind.

7. Ballenpresse nach Anspruch 6, **dadurch gekennzeichnet, dass** die Verbreiterungselemente (27) mit lösbaren oder unlösbaren Befestigungsmitteln (28) am Grundkörper des Zahnrades (20) angebracht sind.

8. Ballenpresse nach einem oder mehreren der Ansprüche 2 bis 7, **dadurch gekennzeichnet, dass** sich die Verbreiterung der Zahnbreite im Bereich des Drehwinkels (25) bis zur Nabe des Zahnrades (20) erstreckt oder ausschließlich im Verzahnungsbereich angeordnet ist.

## Claims

1. An agricultural bale press having a gear transmission with at least one gear for driving at least one crank connected to a rotary shaft, wherein the gear is driven by a tooth element for the drive of a pressing piston in an agricultural bale press, **characterised in that** the gear (20) is of an irregular tooth width in its peripheral direction and wherein the greater tooth width is provided in the region of high loadings.

2. A bale press according to claim 1 **characterised in that** the tooth width of the gear (20) in at least one limited region of the rotary angle (25) is greater than the tooth width of the remaining region of the gear (20).

3. A bale press according to claim 2 **characterised in that** the tooth width of the remaining region of the gear (20) is less than the tooth width of the meshing tooth element (18).

4. A bale press according to claim 2 or claim 3 **characterised in that** the tooth width of the gear (20) in the region of the rotary angle (25) approximately corresponds to the tooth width of the meshing tooth element (18).

5. A bale press according to one or more of claims 2 to 4 **characterised in that** in the region of the rotary angle (25) the blank of the gear (20) is of a greater width than in the remaining peripheral region.

6. A bale press according to one of more of claims 2 to 5 **characterised in that** width extension elements (27) are arranged in the region of the rotary angle (25) of the gear (20).

7. A bale press according to claim 6 **characterised in that** the width extension elements (27) are mounted to the main body of the gear (20) with releasable or non-releasable fixing means (28).

8. A bale press according to one of more of claims 2 to 7 **characterised in that** the width extension of the tooth width in the region of the rotary angle (25) extends to the hub of the gear (20) or is arranged exclusively in the width extension region.

## Revendications

1. Presse à balles agricole qui présente un engrenage comportant au moins une roue dentée pour entraîner au moins une manivelle reliée à un arbre tournant, la roue dentée étant entraînée par un élément denté pour l'entraînement d'un piston de pressage dans une presse à balles agricole, **caractérisée en ce que** la roue dentée (20) présente une largeur de dent irrégulière dans sa direction périphérique, la largeur de dent plus grande étant réalisée dans la zone des sollicitations plus élevées.

2. Presse à balles selon la revendication 1, **caractérisée en ce que**, dans au moins une zone limitée de l'angle de rotation (25), la largeur de dent de la roue dentée (20) est supérieure à la largeur de dent de la zone restante de la roue dentée (20).

3. Presse à balles selon la revendication 2, **caractérisée en ce que** la largeur de dent de la zone restante de la roue dentée (20) est inférieure à la largeur de dent de l'élément denté (18) engrenant.

4. Presse à balles selon l'une des revendications 2 ou 3, **caractérisée en ce que** la largeur de dent de la roue dentée (20) dans la zone de l'angle de rotation (25) correspond à peu près à la largeur de dent de l'élément denté (18) engrenant.

5. Presse à balles selon l'une ou plusieurs des revendications 2 à 4, **caractérisée en ce que** l'ébauche de la roue dentée (20) présente une largeur plus grande dans la zone de l'angle de rotation (25) que dans le reste de la zone périphérique.

6. Presse à balles selon l'une ou plusieurs des revendications 2 à 5, **caractérisée en ce que** des éléments d'élargissement (27) sont disposés dans la zone de l'angle de rotation (25) de la roue dentée (20).

7. Presse à balles selon la revendication 6, **caractérisée en ce que** les éléments d'élargissement (27) sont montés avec des moyens de fixation (28) sur le corps de base de la roue dentée (20) amovibles ou inamovibles.

8. Presse à balles selon l'une ou plusieurs des revendications 2 à 7, **caractérisée en ce que** l'élargissement de la largeur de dent dans la zone de l'angle de rotation (25) s'étend jusqu'au moyeu de la roue dentée (20) ou est disposé uniquement dans la zone de la denture.
